# EUROPEAN PATENT SPECIFICATION

(11) **EP 1 953 956 B1**
(45) Date of publication and mention of the grant of the patent: **06.09.2017**
(21) Application number: 06805218.2
(22) Date of filing: 10.11.2006
(51) Int. Cl.: H04L 12/701, H04L 12/18

(54) **COMMUNICATION NETWORK SYSTEM AND LEAF-NODE NETWORK ELEMENT OF THE MULTICASTING TREE SIGNAL TRANSMISSION METHOD AND NODE NETWORK ELEMENT THEREOF**
KOMMUNIKATIONSNETZSYSTEM UND LEAF-KNOTEN-NETZWERKELEMENT DES MULTICASTING-BAUMSIGNAL-ÜBERTRAGUNGSVERFAHRENS UND KNOTENNETZWERKELEMENT DAFÜR
PROCEDE D'EMISSION DE SIGNAL EN ARBRE DE DIFFUSION MULTI-DESTINATAIRE, ET ELEMENT DE RESEAU NOEUD CORRESPONDANT

(30) Priority: 11.11.2005 CN 200510101168
(43) Date of publication of application: 06.08.2008
(73) Proprietor: Huawei Technologies Co., Ltd., Longgang District Shenzhen, Guangdong 518129 (CN)
(72) Inventor: ZOU, Shimin, Guandong 518129 (CN)
(74) Representative: Gill Jennings & Every LLP
(86) International application number: PCT/CN2006/003024
(87) International publication number: WO 2007/054032

(56) References cited:
- JP-A- 2005 244 526
- US-A1- 2004 260 814
- US-A1- 2004 264 462
- US-A1- 2005 015 404
- US-A1- 2005 201 278
- US-B1- 6 728 777
- US-B1- 6 879 594
- Santosh Abraham, Jonathan Agre, Aoki et al.: "802.11 TGs Simple Efficient Extensible Mesh (SEE-Mesh) Proposal" IEEE 802.11 IEEE 802.11-05/0562r2 7 November 2005 (2005-11-07), pages 1-69, XP002567229 Retrieved from the Internet: URL:https://mentor.ieee.org/802.11/dcn/05/ 11-05-0562-02-000s-802-11-tgs-simple-effic ient-extensible-mesh-seemesh-proposal.doc> [retrieved on 2010-02-04]
- YOUNG-KYU OH ET AL: "Scalable mpls multicast using label aggregation in internet broadcasting systems" TELECOMMUNICATIONS, 2003. ICT 2003. 10TH INTERNATIONAL CONFERENCE ON FEB. 23 - MAR. 1, 2003, PISCATAWAY, NJ, USA,IEEE, vol. 1, 23 February 2003 (2003-02-23), pages 273-280, XP010637820 ISBN: 978-0-7803-7661-8
- ESCALONA E ET AL: "Establishing source-routed bidirectional connections over the unidirectional ASON/GMPLS carisma testbed", TRANSPARENT OPTICAL NETWORKS, 2005, PROCEEDINGS OF 2005 7TH INTERNATIO NAL CONFERENCE BARCELONA, CATLONIA, SPAIN JULY 3-7, 2005, PISCATAWAY, NJ, USA,IEEE, vol. 2, 3 July 2005 (2005-07-03), pages 21-24, XP010834482, DOI: 10.1109/ICTON.2005.1506089 ISBN: 978-0-7803-9236-6
- IJSBRAND WIJNANDS BOB THOMAS CISCO SYSTEMS ET AL: "Multicast Extensions for LDP; draft-wijnands-mpls-ldp-mcast-ext-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, 1 March 2005 (2005-03-01), XP015039845, ISSN: 0000-0004

## Description

The present application claims the priority of Chinese Patent Application No. 200510101168.2, filed on November 11th, 2005 and titled as "A METHOD FOR TRANSMITTING SIGNAL BETWEEN LEAF-NODES OF MULTICAST TREE IN THE COMMUNICATION NETWORK", the content of which is incorporated herein by reference in its entity.

### Field of the Invention

The present disclosure relates to multicast service technology, and in particular to a method for transmitting a signal between leaf-nodes of a multicast tree in the communication network, to a communication network system and a node thereof.

### Background of the Invention

Along with the increasing demand for communication services, the demand for multicast services such as video conferencing, Video on Demand (VOD) and multi-lateral database backup has emerged in communication networks. The multicast services require the communication network to provide QoS (Quality of Service) assurance for voice, data, and video services. Usually a multicast tree is established and maintained in the connection-oriented communication network to support these types of multicast services. A multicast tree is a tree-shaped unidirectional connection with a fixed bandwidth, from a source node to a plurality of destination nodes. The source node of a multicast tree is normally named as the root-node node, and the respective destination nodes of the multicast tree are normally named as the leaf-node nodes. The multicast tree can be used to support unidirectional broadcast or multicast services, such as VOD service and the like.

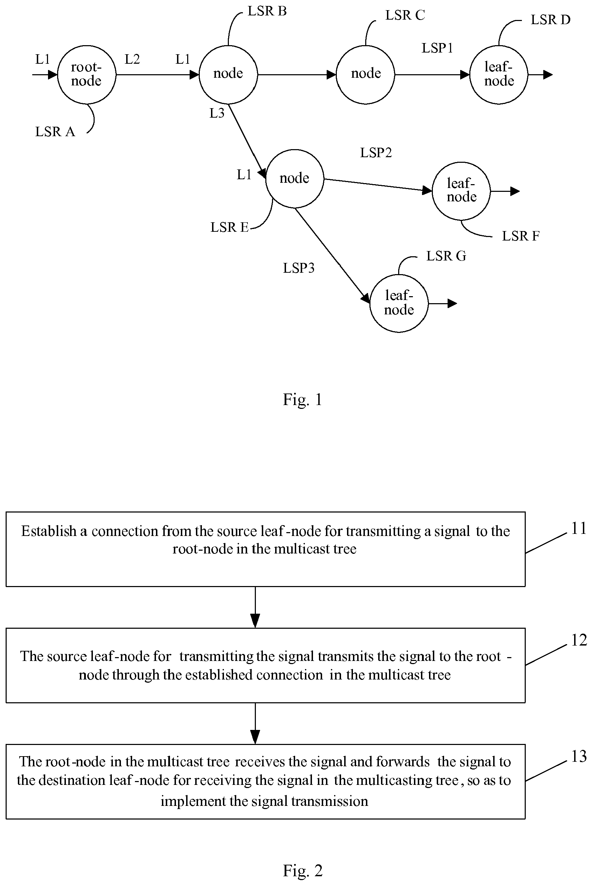

At present, an end-to-end connection can be rapidly established in a connection-oriented communication network through the introduction of the control plane technology. Using signaling technology and routing technology of the control plane, it is possible to swiftly establish the multicast tree and efficiently share the network resource. In prior art, all the branches of the multicast tree are unidirectional connections. In order to establish the multicast tree, the unidirectional establishing process needs to be initiated from the root-node to every leaf-node. After all the unidirectional connections have been established, the bandwidth resource on the public path can be shared through a merging process for resources. With the calculation of efficient routing for the root-node, all the unidirectional connections of the multicast tree can efficiently share the bandwidth resource of the public path. As shown in Figure 1, when the nodes LSR (Label Switch Router) D, and LSR F and LSR G are receiving the multicast signal from LSR A, the node LSR A initiates the establishing process for the unidirectional connection LSP (Label Switch Path) 1 to leaf-node LSR D, through LSR B and LSR C, the establishing process for the unidirectional connection LSP2 to leaf-node LSR F, through LSR B and LSR E, and the establishing process for the unidirectional connection LSP3 to leaf-node LSR G, through LSR B and LSR E. The three unidirectional connections are associated with each other through unique multicast identifier, and a plurality of unidirectional LSPs is merged on the public path to share the transmission resource. The sharing of resource among the above three unidirectional LSPs after their establishment is specifically as follows: LSP 1, LSP 2 and LSP 3 share the label resource (L1, L2) at the entrance and the exit of LSR A, as well as the label resource (L1) at the entrance of LSR B. LSP 2 and LSP 3 share the label resource (L1, L2) at the entrance and the exit of LSR A, the label resource (L1, L3) at the entrance and exit of LSR B, and the label resource (L1) at the entrance of LSR E.

In prior art, in order to transmit a signal from a leaf-node to other leaf-nodes of the multicast tree, it is usually necessary to form a new multicast tree, taking the leaf-node requesting signal transmission as a root-node, and other leaf-nodes as new leaf-nodes. In this way, the demand to transmit a multicast signal from any leaf-node to other appointed leaf-nodes is fulfilled.

The above prior art has the following defects:
Firstly, in order to transmit signal from a certain leaf-node to other leaf-nodes of the multicast tree, it is usually necessary to form a new multicast tree, taking the leaf-node requesting signal transmission as the root-node. The arrangement can not efficiently utilize the network resource occupied by the current multicast tree, thus is a waste of network resource. Furthermore, in a TDM (Time Division Multiplexing) network such as SDH (Synchronous Digital Hierarchy), where the general connections are bi-directional, if unidirectional connection is established, the time slot resource of another direction is hard to be utilized. Therefore, the network resource will suffer a very low utilization ratio if a new unidirectional multicast tree is established. In addition, sometimes it is impossible to establish a new multicast tree due to various prerequisites to establish connections.
Secondly, during the establishment of a new multicast tree in order to transmit signal from a certain leaf-node to other leaf-nodes, it is inevitable to cause an increase of resource overhead on control plane signaling and routing, including the overhead on extended signaling network, and the overhead for the nodes to save and process new signaling and routing information.

Santosh Abraham, Jonathan Agre, Aoki et al.: "802.11 TGs Simple Efficient Extensible Mesh (SEE-Mesh) Proposal" (IEEE 802.11 IEEE 802.11-05/0562r2 7 November 2005, pages 1-69) discloses 802.11 TGs Simple Efficient Extensible Mesh (SEE-Mesh) Proposal, in which if a mesh point in a WLAN Mesh is optionally configured as a root node, other mesh points proactively maintain routes to the root node using topology discovery primitives, and any MP hearing the announcement directly updates its Route table. When a node wants to send a frame to another node, and if it has no route to that root (mapping its address to a given MP), it may send the frame to the root.

IJSBRAND WIJNANDS BOB THOMAS CISCO SYSTEMS ET AL: "Multicast Extensions for LDP; draft-wijnands-mpls-ldp-mcast-ext-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/,, 1 March 2005 (2005-03-01), discloses a method for building a MP2MP tree with bidirectional connections. YOUNG-KYU OH ET AL: "Scalable mpls multicast using label aggregation in internet broadcasting systems" (Telecommunications, 2003. ICT 2003. 10TH International conference on FEB. 23 - MAR. 1, 2003, Piscataway, NJ, USA, IEEE, vol. 1, 23 February 2003, pages 273-280) discloses two methods of establishing multicast traffic engineered path, in which the leaf-initiate traffic engineered tree is a tree built from the leafs to the root. Each leaf node sends a Join message with the explicit reverse path object and an MPLS label towards the root. At the subsequent upstream router, the Join messages of the same tree are merged. A label is allocated and the forwarding table is updated.

US 6879594 B1 discloses a method for avoiding loops from forming when setting up label switched paths is provided. The method uses a Label Splicing Message is followed by an Acknowledgement message to determine if loops are formed in the process of joining a new node or subtree to a multicast MPLS tree. By verifying that the path towards the root of the MPLS tree is loop-free during the construction of the tree, this method complements the loop detection mechanism provided by the label switched protocol (LDP).

### Summary of the Invention

The present disclosure provides a method for transmitting a signal between leaf-nodes of a multicast tree in the communication network, and provides a communication network system and a node thereof. When the multicast tree that supports multicast service has been established in a connection-oriented network, with a plurality of leaf-nodes participating in the signal transmission together, the network resource occupied by the existing multicast tree can be shared to the maximum.

According to one aspect of the present disclosure, the method for transmitting a signal between leaf-nodes of a multicast tree in a communication network includes:
determining, by a root-node of the multicast tree, a quasi bi-directional connection to each leaf-node of the multicast tree, wherein in the quasi bi-directional connection, a unidirectional connection from the root-node to the leaf-node reserves resource on control plane and allocates the resource on transmission plane; a unidirectional connection from the leaf-node to the root-node only reserves resource on the control plane, and does not allocate the resource on the transmission plane;
transmitting, by the root-node, to the each leaf-node a call request message which contains instruction information instructing to establish the quasi bi-directional connection;
determining, by the each leaf-node, the call request message from the root-node for establishing the quasi bi-directional connection, according to the instruction information contained in the call request message;
returning, by the each leaf-node, a call responding message to the root-node; transmitting, by the root-node, to the each leaf-node a connection request message which contains instruction information by which a unidirectional connection from the root-node to the leaf-node reserves resource on a control plane and allocates resource on a transmission plane, while a unidirectional connection from the leaf-node to the root-node only reserves resource on the control plane and does not allocate resource on the transmission plane;
reserving, by the each leaf-node, resource according to the instruction information contained in the connection request message;
returning, by the each leaf-node, a connection responding message to the root-node;
initiating, by a source leaf-node of the multicast tree for transmitting a signal, an establishment request to modify the quasi bi-directional connection from the root-node to the source leaf-node into a bi-directional connection;
transmitting, by the root-node, to the source leaf-node a connection request message which contains instruction information for modifying the quasi bi-directional connection into a bi-directional connection in response to the establishment request, wherein the instruction information for modifying the quasi bi-directional connection into a bi-directional connection instructs that the unidirectional connection from the source leaf-node to the root-node reserve resource on the control plane and allocates resource on the transmission plane;
reserving, by the source leaf-node, resource according to the instruction information contained in the connection request message, and returning a responding message to the root-node;
transmitting, by the source leaf-node, a signal to the root-node through the unidirectional connection from the leaf-node to the root-node of the established bi-directional connection; and
   forwarding, by the root-node, the received signal to a destination leaf-node of the multicast tree.

Another aspect of the present disclosure provides a method for transmitting a signal between leaf-nodes of a multicast tree in a communication network, including:
transmitting, by a source leaf-node of the multicast tree, to a root-node of the multicast tree a call request message containing instruction information indicating that the source leaf-node requests transmission of a signal;
determining, by the root-node, that the source leaf-node requests the transmission of a signal according to the instruction information contained in the call request message, and returning a call responding message to the source leaf-node;
   querying, by the root-node, whether a node can be used to establish a unidirectional connection from the source leaf-node to the root-node;
   transmitting, by the source leaf-node, a connection request message containing instruction information indicating the request to establish a unidirectional connection from the source leaf-node to the root-node via the node;
   returning, by the root-node, a connection responding message to the source leaf-node via the node to complete the establishment of the connection from the source leaf-node to the root-node;
transmitting, by the source leaf-node, a signal to the root-node via the node through the unidirectional connection from the source leaf-node to the root-node; and forwarding, by the root-node, the received signal to destination leaf-nodes of the multicast tree.

The present disclosure provides a method for transmitting a signal between leaf-nodes of a multicast tree in the communication network, including the steps of: establishing a connection from the source leaf-node of the multicast tree, which is adapted to transmit a signal, to the root-node; transmitting, by the source leaf-node of the multicast tree for transmitting the signal, the signal to the root-node through the established connection; and forwarding, by the root-node of the multicast tree, the received signal to the destination leaf-node of the multicast tree for receiving the signal, so as to implement the transmission of a signal. The arrangement makes it possible for the leaf-node to transmit the signal to other leaf-nodes in a connection-oriented network, while efficiently taking use of the existing network resources of the multicast tree, and reducing the overhead on signaling to the maximum.

### Brief Descriptions of the Drawings

Figure 1 is a schematic diagram illustrating the establishment of a multicast tree in prior art;
Figure 2 is a primary flow chart illustrating a method for transmitting a signal between leaf-nodes in the communication network according to an embodiment of the present disclosure;
Figure 3 is a primary flow chart for establishing the quasi bi-directional connection from the root-node to the leaf-node according to an embodiment of the present disclosure;
Figure 4 is a schematic diagram illustrating the object of connection attributes added through extending GMPLS RSVP-TE signaling protocol according to the present disclosure;
Figure 5 is a flow chart illustrating a method for transmitting a signal between the leaf-nodes of the multicast tree according to an embodiment of the present disclosure;
Figure 6 is a schematic diagram illustrating the object of request instruction for the leaf-node added through extending GMPLS RSVP-TE signaling protocol according to an embodiment of the present disclosure;
Figure 7 is a schematic diagram illustrating a practical implementation of the multicast tree according to the present disclosure, which realizes the function that a leaf-node transmits signal to other leaf-nodes of the multicast tree;
Figure 8 is a schematic diagram illustrating the allocation of label resources in the multicast tree shown in Figure 7;
Figure 9 is a signaling flow chart illustrating a practical implementation that a multicast service is established between the leaf-node LSR D and the root-node LSR A by means of the extended GMPLS RSVP-TE signaling protocol;
Figure 10 is a signaling flow chart illustrating the practical implementation shown in Figure 7, where the leaf-node LSR F in the multicast tree transmits local user signal to other nodes;
Figure 11 is a flow chart illustrating the practical implementation that a leaf-node establishes a new unidirectional connection to the root-node upon transmitting a user signal;
Figure 12 is a schematic diagram illustrating a practical implementation that the leaf-node transmits a signal through a newly established connection from the leaf-node to the root-node, in accordance with the present disclosure;
Figure 13 is a schematic diagram illustrating the allocation of label resources in the multicast tree shown in Figure 12;
Figure 14 is a signaling flow chart illustrating the practical implementation that the leaf-node LSR D in the multicast tree transmits local user signal to other nodes of the multicast tree;
Figure 15 is a schematic diagram illustrating a practical implementation of the communication network system according to the present disclosure;
Figure 16 is a structural block diagram for implementing the communication network shown in Figure 15, in accordance with one embodiment of the present disclosure; and
Figure 17 is a structural block diagram for implementing the communication network shown in Figure 15, in accordance with another embodiment of the present disclosure.

### Detailed Descriptions of the Embodiments

In embodiments of the present disclosure, when a leaf-node in a multicast tree requests to transmit a signal to other leaf-nodes, a new connection is established between the root-node and the leaf-node or existing connection is modified, so that the signal from the leaf-node can be transmitted to the root-node. Through a local switching process, the root-node switches the signal from the leaf-node to the other leaf-nodes along the direction of the multicast tree. The arrangement makes it possible for a leaf-node to transmit signal to other leaf-nodes using the network resources of the existing multicast tree.

Referring to Figure 2, Figure 2 is a primary flow chart illustrating a method for transmitting a signal between leaf-nodes in the communication network according to an embodiment of the present disclosure, including the following steps.

In step 11, establish a connection from the source leaf-node of the multicast tree, which is adapted to transmit a signal, to the root-node. In practical cases, the established connection can be a bi-directional connection from the root-node to the source leaf-node, or a unidirectional connection that is newly established from the source leaf-node to the root-node.

In step 12, the source leaf-node of the multicast tree that is adapted to transmit the signal transmits the signal to the root-node through the established connection.

In step 13, after receiving the signal, the root-node of the multicast tree forwards the signal to the destination leaf-node of the multicast tree, which is adapted to receive the signal, thereby implementing the transmission of a signal.

The establishment of the connection between the source leaf-node and the root-node described above can be realized by modifying the existing connection from the root-node to the leaf-node. The existing connection is a quasi bi-directional connection from the root-node to the leaf-node, the quasi bi-directional connection having the following attributes.

Within the quasi bi-directional connection, the unidirectional connection from the root-node to the leaf-node reserves resource on the control plane, and allocates the resource on the transmission plane; the unidirectional connection from the leaf-node to the root-node only reserves resource on the control plane, and does not allocate the resource on the transmission plane.

In the embodiments of the present disclosure, when a leaf-node requests to transmit signal, it is possible to use existing call and connection establishment process to perform control over the unidirectional connection from the leaf-node to the root-node so as to allocate the resource on the transmission plane, thus modifying the quasi bi-directional connection into a bi-directional connection from the root-node to the leaf-node.

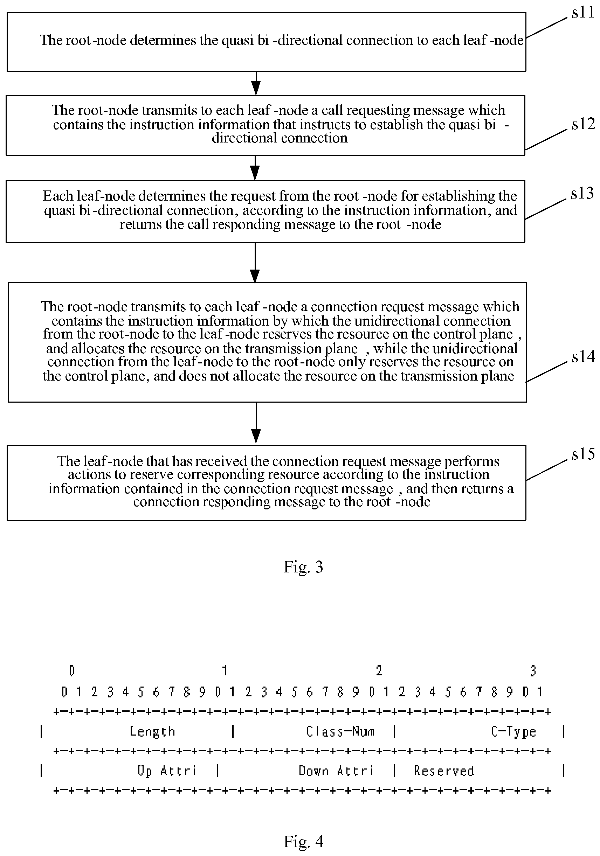

Referring to Figure 3, Figure 3 is a primary flow chart for establishing the quasi bi-directional connection from the root-node to the leaf-node according to an embodiment of the present disclosure, wherein the root-node of the multicast tree initiates the request to establish a quasi bi-directional connection to each leaf-node; each leaf-node of the multicast tree establishes a quasi bi-directional connection with the root-node in response to establish the quasi bi-directional connection. The specific process is as below.

In step s11, the root-node determines the quasi bi-directional connection to each leaf-node;
In step s12, the root-node transmits to each leaf-node a call request message which contains the instruction information that instructs to establish the quasi bi-directional connection;
In step s13, each leaf-node determines the request from the root-node for establishing the quasi bi-directional connection, according to the instruction information, and returns the call responding message to the root-node;
In step s14, the root-node transmits to each leaf-node a connection request message which contains the instruction information by which the unidirectional connection from the root-node to the leaf-node reserves the resource on the control plane and allocates the resource on the transmission plane, while the unidirectional connection from the leaf-node to the root-node only reserves the resource on the control plane and does not allocate the resource on the transmission plane;
In step s15, the leaf-node that has received the connection request message performs actions to reserve corresponding resource according to the instruction information contained in the connection request message, and then returns a connection responding message to the root-node.

When actually realizing the above process with signaling, the embodiments of the present disclosure can be achieved through extending RSVP-TE (RSVP Traffic Engineering) signaling protocol of the current GMPLS (Generalized Multi-Protocol Label Switch). For example, the call request message and the connection request message can both use the PATH message of the RSVP-TE protocol of the extended GMPLS, and the call responding message and the connection responding message can both use the Resv message of the extended GMPLS RSVP-TE protocol. As a practical implementation, the PATH message in the extended GMPLS RSVP-TE protocol can be extended to add into an object of connection attributes, which is used to contain an instruction information instructing the establishment of the quasi bi-directional connection, or an instruction information by which the unidirectional connection from the root-node to the leaf-node reserves resource on the control plane, and allocates the resource on the transmission plane, while the unidirectional connection from the leaf-node to the root-node only reserves the resource on the control plane, and does not allocate resource on the transmission plane.

To demonstrate that with an actual message expansion of signaling protocol, the embodiments of the present disclosure may introduce a new object of connection attributes, namely, CONNECTIONG_ATTRI, into the current message of GMPLS RSVP-TE signaling protocol.

As shown in Figure 4, the CONNECTIONG_ATTRI object may contain the following components:
1. Length: the length of the object in octet, including the heading part. The length value of the object may be 8;
2. Class-Num: type code, whose value is allocated by the IANA, for example 222;
3. C-Type: subtype code, whose value is allocated by the IANA, for example 1;
4. Up Attri: the attribute of the connection from the source node to the destination node, which may take one of the following values:
   0: the connection along the direction is nonexistent (if there is only a unidirectional connection from the destination to the source);
   1: reserve source on the control plane, and allocate resource on the transmission plane;
   2: reserve source on the control plane, but do not allocate resource on the transmission plane;
   3∼255: reserved;
5. Down Attri: the attribute of the connection from the destination node to the source node, which may take one of the following values:
   0: the connection along the direction is nonexistent (if there is only a unidirectional connection from the source to the destination);
   1: reserve source on the control plane, and allocate resource on the transmission plane;
   2: reserve source on the control plane, but do not allocate resource on the transmission plane;
   3∼255: reserved;
6. Reserved: reserved.

Through instruction for the object of connection attributes, it is possible to communicate between the root-node and other nodes, so as to establish the quasi bi-directional connection.

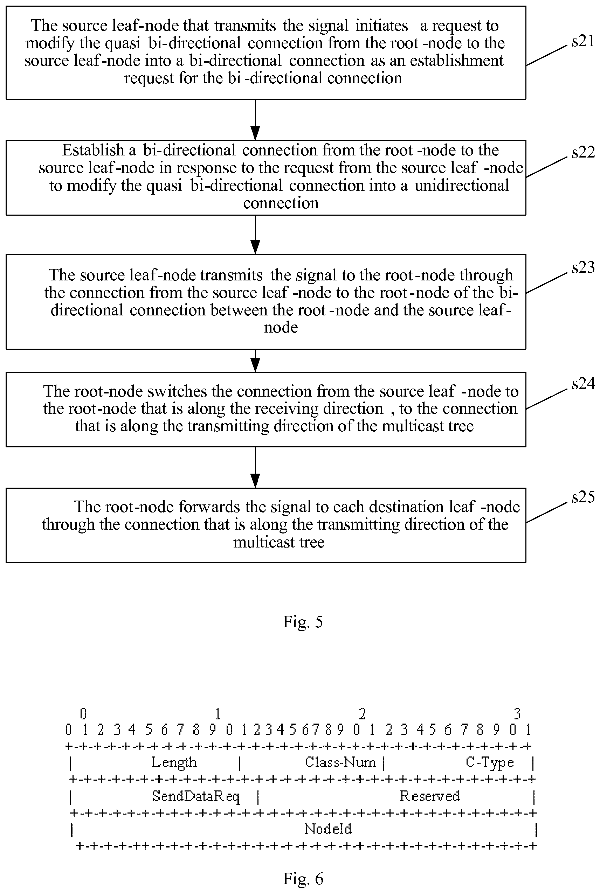

Referring to Figure 5, Figure 5 is a flow chart illustrating a method for transmitting a signal of the leaf-nodes of the multicast tree according to an embodiment of the present disclosure, including the following primary steps.

In step s21, the source leaf-node for transmitting the signal initiates an establishment request to modify the quasi bi-directional connection from the root-node to the source leaf-node, into a bi-directional connection. In the case of the implementation, the source leaf-node for transmitting a signal transmits to the root-node a call request message containing the instruction information indicating that the source leaf-node requests the transmission of a signal. The root-node that has received the call request message determines, according to local policy, whether or not to accept the call request from the source leaf-node. If positive, the root-node determines that the source leaf-node requests the transmission of a signal according to the instruction information, and transmits a responding message back to the source leaf-node. Else, the root-node transmits a call rejecting message to the source leaf-node.

In step s22, establish a bi-directional connection from the root-node to the source leaf-node in response to the establishment request from the source leaf-node to modify the quasi bi-directional connection into a bi-directional connection. In the case of the implementation, the root-node transmits a connection request message to the source leaf-node through transit nodes. The connection request message contains the instruction information for modifying the quasi bi-directional connection into a bi-directional connection. The source leaf-node and the transit nodes that have received the connection request message reserve corresponding resources for the bi-directional connection according to the instruction information, and return a responding message to the root-node.

In step s23, the source leaf-node transmits message to the root-node through the connection from the source leaf-node to the root-node of the bi-directional connection between the two nodes.

In step s24, the root-node switches the connection from the source leaf-node to the root-node, which is along the receiving direction, to the connection that is along the transmitting direction of the multicast tree.

In step s25, the root-node forwards the signal to each destination leaf-node through the connection that is along the transmitting direction of the multicast tree.

When actually implementing the above process with signaling, it is possible for the embodiment of the present disclosure to be implemented by extending the current GMPLS RSVP-TE signaling protocol. For example, the call request message and connection request message can both use the Path message in the extended GMPLS RSVP-TE protocol, and the call responding message and connection responding message can both use the Resv message in the extended GMPLS RSVP-TE protocol. In one embodiment, the PATH message in the extended GMPLS RSVP-TE protocol can be extended to add into an object of request instruction to which the signal is transmitted by the leaf-node, which is used to contain the instruction information indicating that the source leaf-node requests the transmission of a signal, as well as an object of connection attributes, which is used to contain the instruction information for the modification from the quasi bi-directional connection into the bi-directional connection. The actual implementation of the object of connection attributes has been shown above, and here is an example to demonstrate the implementation of the object of request instruction to which the signal is transmitted by the source leaf-node.

The embodiment of the present disclosure may introduce a new object of request instruction to which the signal is transmitted by the leaf-node, namely, SEND_DATA_REQUEST, into the current GMPLS RSVP-TE signaling protocol.

As shown in Figure 6, the SEND_DATA_REQUEST object may contain the following components:
1. Length: the length of the object in octet, including the object's head. The length value of the object may be 12;
2. Class-Num: type code, whose value is allocated by the IANA, for example 223;
3. C-Type: subtype code, whose value is allocated by the IANA, for example 1;
4. SendDataReq: the request instruction for the leaf-node to transmit signal, which may take one of the following values:
   0: do not transmit the signal;
   1: the leaf-node requests to transmit the signal to other leaf-nodes of the multicast tree;
   2∼255: reserved;
5. NodeId: the serial number of the leaf-node that requests to transmit the signal;
6. Reserved: reserved.

The root-node that has been instructed by the object of request instruction can communicate with the leaf-node to initiate the transmission of a signal.

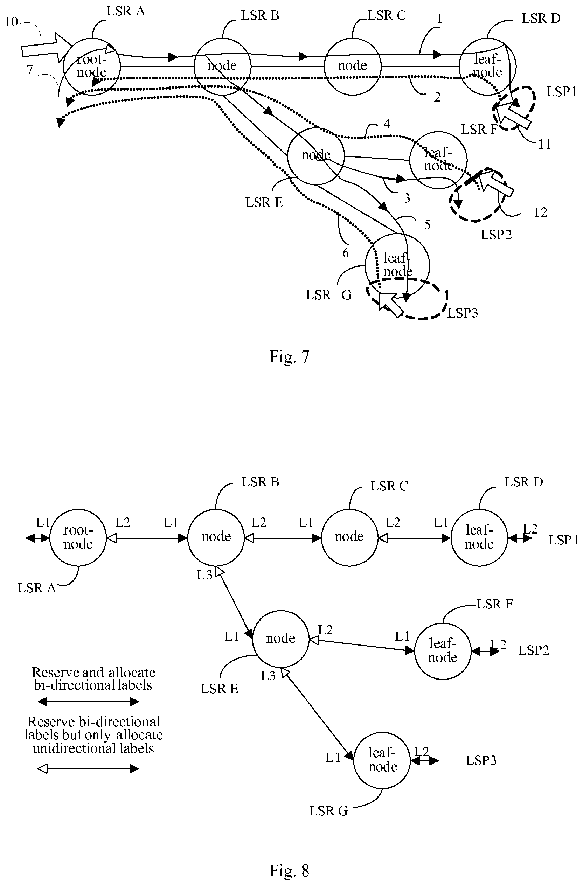

Referring the Figure 7, the embodiment will be described as below. Figure 7 is a schematic diagram illustrating a practical implementation of the multicast tree according to the present disclosure, which realizes the function that a leaf-node transmits signal to other leaf-nodes of the multicast tree.

In a connection-oriented network (such as GMPLS), the nodes that participate in the multicast service include LSR A, LSR B, LSR C, LSR D, LSR E, LSR F and LSR G, of which the LSR A is the root-node of the multicast tree. As each leaf-node joins the multicast tree, it first transmits an end-to-end request towards the root-node of the multicast tree. The establishment process for the quasi bi-directional connection from the root-node to the leaf-node is initiated only following the completion of the call. After each leaf-node has joined the call of the multicast tree and the connection signaling process has been completed, the leaf-nodes of the multicast tree LSR D, LSR F and LSR G have respectively established a quasi bi-directional connection with the root-node LSR A, namely, LSP1, LSP2, LSP3. Of these connections, LSP1, LSP2 and LSP3 share the resource between LSR A and LSR B; LSP2 and LSP 3 share the resource through LSR A, LSR B and LSR E. As shown in Figure 7, the quasi bi-directional connection LSP1 includes the unidirectional connection 1 from LSR A to LSR D and the unidirectional connection 2 from LSR D to LSR A. The quasi bi-directional connection LSP2 includes unidirectional connections 3 and 4, and the quasi bi-directional connection LSP3 includes unidirectional connections 5 and 6. Among the quasi bi-directional connections LSP1, LSP2 and LSP3, the unidirectional connections 1, 3 and 5 reserve the resource on the control plane and allocate the resource on the transmission plane, while the unidirectional connections 2, 4 and 6 reserve the resource on the control plane but do not allocate the resource on the transmission plane. After the connections LSP1, LSP2 and LSP3, which possess the above attributes, have been established, all of the leaf-nodes LSR D, LSR F and LSR G can receive the user signal 10 transmitted from the root-node LSR A.

When LSR D requests to transmit a signal to other leaf-nodes of the multicast tree, the current signaling protocol can be extended to modify the connection attributes of LSP1, so that the unidirectional connection 2 reserves resource on the control plane and allocates resource on the transmission plane, thus modifying the quasi bi-directional connection LSP1 into a bi-directional connection. In addition, the root-node LSR A switches from the unidirectional connection 2 of the LSP1 to the unidirectional connection 1 through local process 7. At this time, the user signal 11 of LSR D can be transmitted to all leaf-nodes, but the user signal 10 of LSR A can no longer be transmitted at the same time.

In the case that any other leaf-node requires to perform the transmission of a signal, for example, if the node LSR F requests LSR A to transmit a signal, LSR A first modifies the connection attributes of LSP1 related to LSR D that is currently transmitting signal, recovering LSP1 to its original status, that is, the unidirectional connection 2 reserves the resource on the control plane and releases the allocated resource on the transmission plane, while the unidirectional connection 1 retains its current status. The connection attribute of LSP2 is modified, that is, the unidirectional connection 4 reserves the resource on the control plane and allocates the resource on the transmission plane. Of course, the modifications on the connection attributes of LSP1 and LSP2 can also be performed simultaneously, or the connection attribute of LSP2 is first modified and then the connection attribute of LSP1 is modified. After the modifications for the connection attributes of LSP1 and LSP2 is finished, the root-node LSR A switches from the unidirectional connection 4 of the LSP2 to the unidirectional connection 3 through local process 7. At this time, the user signal 12 of LSR F can be transmitted to all leaf-nodes, but the user signal 11 of LSR D can no longer be transmitted at the same time.

In the embodiment, the establishment process of the multicast tree includes the following steps.
1. The root-node LSR A of a certain multicast service is determined in a connection-oriented network;
2. A leaf-node LSR D demanding to join the multicast tree transmits a call request to the root-node LSR A;
3. LSR A determines that LSR D can be added into the multicast tree, and responds the call request from LSR D;
4. Taking efficient use of the current allocated resource in the multicast tree, LSR A works out a best path to reach the leaf-node LSR D: LSR A - LSR B - LSR C - LSR D;
5. After LSR A determines the best path, the connection path is associated with a unique multicast identifier in the multicast tree, and transmits a signaling message that requests to establish a quasi bi-directional LSP with taking LSR D as the destination node. The connection attribute parameters contained in the parameters of the connection request message of the quasi bi-directional LSP connection has the following characteristics: a) the unidirectional connection from the root-node to the leaf-node reserves the resource on the control plane and allocates the resource on the transmission plane; b) the unidirectional connection from the leaf-node to the root-node reserves the resource on the control plane but does not allocate the resource on the transmission plane.

In the above process, the new parameters for connection attributes in step 5 can be contained in CONNECTIONG_ATTRI, an object of connection attributes that is newly introduced into the current (G)MPLS signaling protocol. For example, the quasi bi-directional LSP connection with above attributes can be established using the signaling mechanism defined in the current ITU-T Recommendation G.7713.2.

After the connection is established, the leaf-node LSR D can receive user signal 10 from the root-node, but at this time, the leaf-node LSR D can not transmit local user signal 11 to other leaf-nodes.

Upon completion of the establishment of the multicast tree according to the above steps, the allocation of label resources is shown in Figure 8. The multicast tree includes three quasi bi-directional connections, of which LSP1, LSP2 and LSP3 share the bi-directional label resources (L2, L1) between LSR A and LSR B. Along the direction from LSR A to the leaf-node, LSR B exchanges the local label L1 to the exit labels L2 and L3. Along another direction, however, LSR B only maintains the simultaneous exchanging relationships from the entrance labels L2 and L3 to the exit label L1 on the control plane, while it does not actually perform the exchange action on the transmission plane. That is, the bi-directional labels from the root-node to the leaf-node is reserved on the control plane, but only unidirectional labels from the root-node to the leaf-node is allocate on the transmission plane, and the unidirectional labels from the leaf-node to the root-node is not allocated on the transmission plane.

LSP2 and LSP3 share the bi-directional label resources (L2, L1) between LSR A and LSR B, and the bi-directional label resources (L3, L1) between LSR B and LSR E. Along the direction from LSR A to the leaf-node, LSR E exchanges the local label L1 to the exit labels L2 and L3. Along another direction, however, LSR E only maintains the simultaneous exchanging relationships from the entrance labels L2 and L3 to the exit label L1 on the control plane, while it does not actually perform the exchange action on the transmission plane.

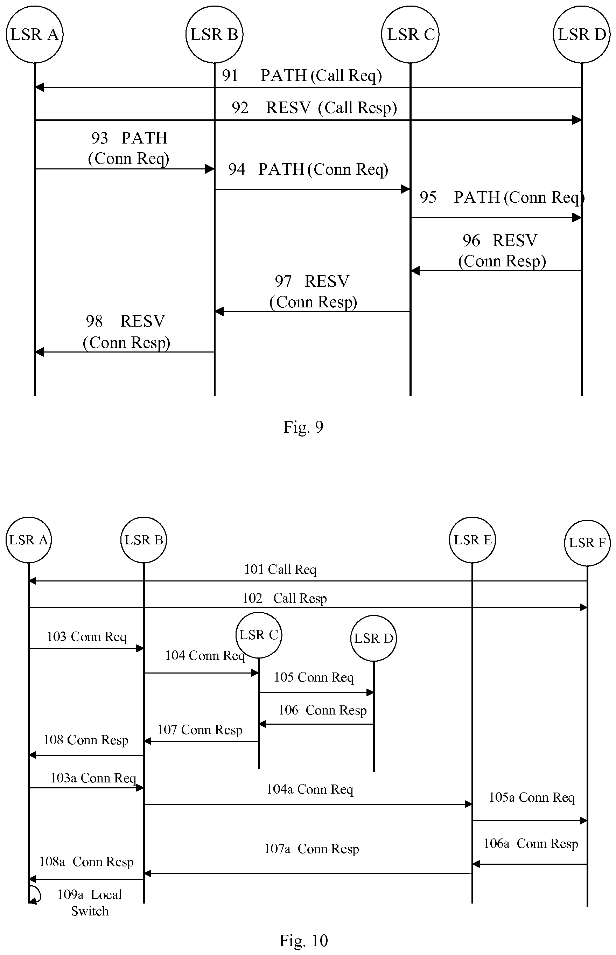

As shown in Figure 9, an embodiment in which a multicast service is established between the leaf-node LSR D and the root-node LSR A by means of the extended GMPLS RSVP-TE signaling protocol includes the following signaling steps.
91. PATH message, the call request message from LSR D to LSR A;
92. RESV message, the call responding message from LSR A to LSR D;
93. PATH message, the bi-directional connection request message from LSR A to LSR B, which contains the extended object CONNECTIONG_ATTRI according to the embodiment of the present disclosure, where Up Attri = 1, Down Attri = 2. LSR A correspondingly reserves and allocates local resources based on the values of the connection attributes;
94. PATH message, the connection request message from LSR B to LSR C. LSR B correspondingly reserves and allocates local resources based on the values of the connection attributes and forwards the CONNECTIONG_ATTRI object to downstream;
95. PATH message, the connection request message from LSR C to LSR D. LSR C correspondingly reserves and allocates local resources based on the values of the connection attributes and forwards the CONNECTIONG_ATTRI object to downstream;
96. RESV message. After receiving the PATH message, LSR D correspondingly reserves and allocates local resources based on the values of the connection attributes and transmits a connection responding message to upstream;
97. RESV message. After receiving the RESV message, LSR C correspondingly reserves and allocates local resources based on the values of the connection attributes and transmits a connection responding message to upstream;
98. RESV message. After receiving the RESV message, LSR B correspondingly reserves and allocates local resources based on the values of the connection attributes and transmits a connection responding message to upstream;
99. After receiving the RESV message, LSR A correspondingly reserves and allocates local resources based on the values of the connection attributes and the connection is established.

In the multicast tree of the embodiment of the present disclosure, if the leaf-node LSR F requests to transmit local user signal 12 to other leaf-nodes, the leaf-node LSR F for transmitting the signal transmits a call request message to the root-node LSR A. The request message contains the instruction information indicating that the leaf-node LSR F demands to transmit the signal. After receiving the call request message from the leaf-node LSR F, the root-node LSR A determines whether the call request can be permitted based on the local policy. If the call request is not permitted, then LSR A transmits a call rejecting message to the leaf-node LSR F, and the request process is over. If the root-node LSR A determines to accept the request from the leaf-node LSR F, the bi-directional connection, which is related to the leaf-node LSR D which is currently transmitting signal, is determined as LSP1. The modification for the attributes of LSP1 is implemented through transmitting a modifying message that contains the CONNECTIONG_ATTRI object to LSR D. Namely, the unidirectional connection 2, which is from the leaf-node LSR D that is currently transmitting signal, to the root-node LSR A, releases the resource it has occupied on the transmission plane, and maintains a reserved status on the control plane. While the unidirectional connection 1, which is from LSR A to LSR D, maintains its original status. After determining that the modification signaling process for the connection status of LSP1 is complete, LSR A transmits a connection request message which contains the CONNECTIONG_ATTRI object to implement the modification on the attributes of LSP2, to the leaf-node LSR F that requests the transmission of a signal, so that resources are allocated for the unidirectional connection 4 from the leaf-node LSR F to the root-node LSR A. Upon receiving the message that the modification on the connection is complete, the information from the unidirectional of the root-node LSR F is locally switched to the unidirectional connection 3 which is along the transmitting direction of the root-node LSR A. In this way, the leaf-node LSR F can transmit the signal 12 to other leaf-nodes of the multicast tree, while the transmission of the user signal 11 of LSR D is stopped.

As shown in Figure 10, the extended GMPLS RSVP-TE signaling protocol is used, and the signaling flow for requesting the transmission of a signal from the leaf-node LSR F to the root-node LSR A is as follows.
101. PATH message, the call request message from LSR F to LSR A, which contains the extended object SEND_DATA_REQUEST according to the embodiment of the present disclosure;
102. RESV message: the call responding message from LSR A to LSR F;
103. PATH message. After determining to accept the call request, LSR A determines that LSR D is the node that is currently transmitting signal by querying, and then LSR A transmits to LSR B a connection request message aiming at LSP1. The LSP1 is the connection between LSR A and LSR D. The connection request message contains the extended object CONNECTIONG_ATTRI according to the present disclosure, where Up Attri = 1, Down Attri = 2. According to the new connection attributes, LSR A releases the resource that the unidirectional connection 2 of LSP1 has allocated on the transmission plane.
104. PATH message, which is the connection request message from LSR B to LSR C. LSR B releases the resource that the unidirectional connection 2 of LSP1 has allocated on the transmission plane based on the new values of the connection attributes and forwards the CONNECTIONG_ATTRI object to downstream;
105. PATH message, which is the connection request message from LSR C to LSR D. LSR C releases the resource that the unidirectional connection 2 of LSP1 has allocated on the transmission plane based on the new values of the connection attributes and forwards the CONNECTIONG_ATTRI object to downstream;
106. RESV message. After receiving the PATH message, LSR D releases the resource that the unidirectional connection 2 of LSP1 has allocated on the transmission plane based on the new values of the connection attributes and transmits a connection responding message to upstream;
107. RESV message. After receiving the RESV message, LSR C forwards the connection responding message to upstream;
108. RESV message. After receiving the RESV message, LSR B forwards the connection responding message to upstream;
103a. PATH message. LSR A transmits to LSR B a connection request message aiming at LSP2. LSP2 is the connection between LSR A and LSR F. The connection request message contains the extended object CONNECTIONG_ATTRI according to the present disclosure, where Up Attri = 1, Down Attri = 1. According to the new value of the connection attributes, LSR A allocates resource for the unidirectional connection 4 of LSP2 on the transmission plane.
104a. PATH message, which is the connection request message from LSR B to LSR E. According to the new value of the connection attributes, LSR B allocates resource for the unidirectional connection 4 of LSP2 on the transmission plane, and forwards the CONNECTIONG_ATTRI object to downstream;
105a. PATH message, which is the connection request message from LSR E to LSR F. According to the new value of the connection attributes, LSR E allocates resource for the unidirectional connection 4 of LSP2 on the transmission plane, and forwards the CONNECTIONG_ATTRI object to downstream;
106a. RESV message. After receiving the PATH message, LSR F allocates resource for the unidirectional connection 4 of LSP2 on the transmission plane according to the new value of the connection attributes, and transmits a connection responding message to upstream;
107a. RESV message. After receiving the RESV message, LSR E forwards the connection responding message to upstream;
108a. RESV message. After receiving the RESV message, LSR B forwards the connection responding message to upstream;
109a. After receiving the RESV message, LSR A performs local switching process by which the connection 4 that is along the receiving direction of LSP2 is switched to the connection 3 that is along the transmitting direction. When the modification for the connection is complete, LSR F can transmit the signal 12 to other leaf-nodes.

Among the above steps, it is feasible that the steps 104, 105, 106, 107, 108 are performed first, and then the steps 104a, 105a, 106a, 107a, 108a are performed, or these steps can also be performed simultaneously, or the steps 104a, 105a, 106a, 107a, 108a are performed first, and then the steps 104, 105, 106, 107, 108 are performed.

According to the above embodiments, the existing quasi bi-directional connection is modified to establish a bi-directional connection from the root-node to the leaf-node, so as to implement the transmission of a signal among leaf-nodes. In a connection-oriented network, in the case of the unidirectional multicast tree established by current method from the root-node to a plurality of leaf-nodes, according to the embodiment of the present disclosure, the transmission of a signal may be implemented by establishing unidirectional connection from the source leaf-node to the root-node. When a leaf-node demands to transmit local user signal to other leaf-nodes of the multicast tree, the source leaf-node that transmits the signal initiates a request for establishing a connection to the root-node. In response to the request for establishing the connection from the source leaf-node, the connection from the source leaf-node to the root-node is established; then the root-node switches the newly established unidirectional connection to the connection along the transmitting direction of the multicast tree. At this time, the leaf-node can transmit local user signal to other leaf-nodes of the multicast tree.

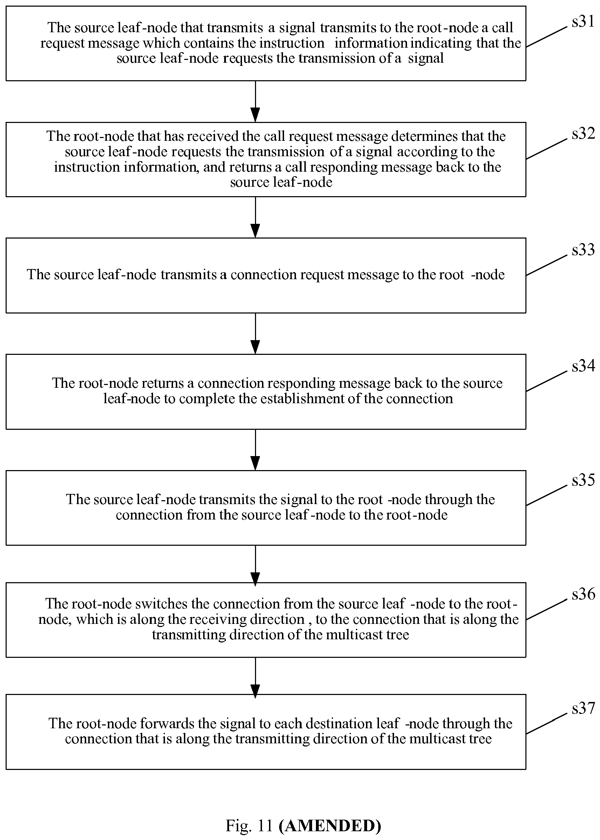

Referring to Figure 11, Figure 11 is a flow chart illustrating the practical implementation that a leaf-node establishes a new unidirectional connection to the root-node upon transmitting a user signal, including the following primary steps.

In step s31, the source leaf-node that transmits the signal transmits to the root-node a call request message which contains the instruction information indicating that the source leaf-node requests the transmission of a signal.

In step s32, the root-node that has received the call request message determines that the source leaf-node requests the transmission of a signal according to the instruction information, and returns a call responding message back to the source leaf-node.

In step s33, the source leaf-node transmits a connection request message to the root-node.

In step s34, the root-node returns a connection responding message back to the source leaf-node to complete the establishment of the connection.

In step s35, the source leaf-node transmits the signal to the root-node through the connection from the source leaf-node to the root-node.

In step s36, the root-node switches the connection from the source leaf-node to the root-node, which is along the receiving direction, to the connection that is along the transmitting direction of the multicast tree.

In step s37, the root-node forwards the signal to each destination leaf-node through the connection that is along the transmitting direction of the multicast tree.

When the above process is implemented by means of signaling, the present disclosure can be implemented by extending the current GMPLS RSVP-TE signaling protocol. For example, the call request message and the connection request message can both be the PATH message in the extended GMPLS RSVP-TE protocol, and the call responding message and the connection responding message can both be the Resv message in the extended GMPLS RSVP-TE protocol. As a practical implementation for the message, the PATH message in the extended GMPLS RSVP-TE protocol can be extended to add into an object of request instruction SEND_DATA_REQUEST of the leaf-node for transmitting the signal. The PATH message is used to contain the instruction information indicating that the source leaf-node requests transmission of a signal. The actual implementation of the object of request instruction for a leaf-node to transmit signal has been described above, so there is no need for repetition here.

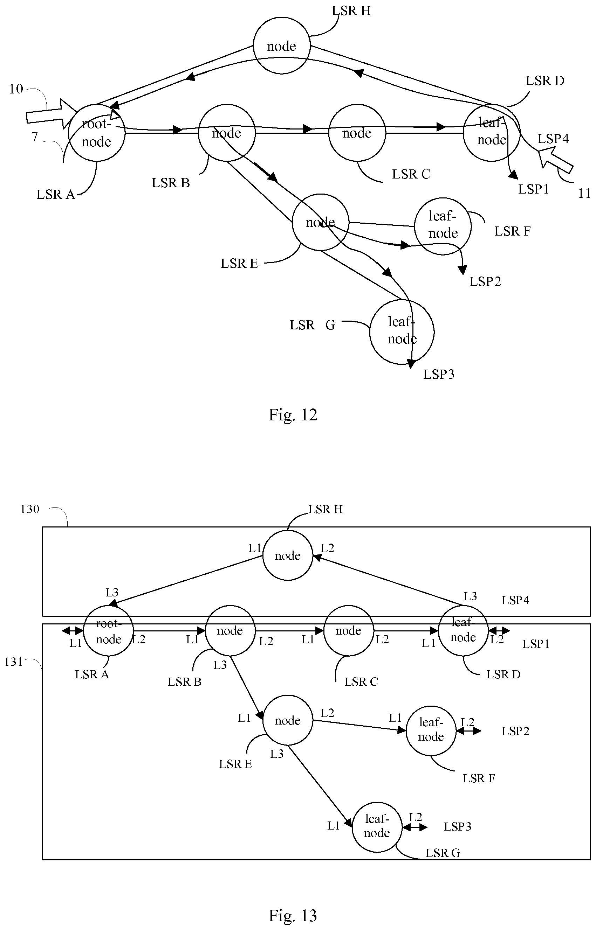

The following is an example to demonstrate the process. As shown in Figure 12, all nodes that the multicast tree transits include: LSR A, LSR B, LSR C, LSR D, LSR E, LSR F and LSR G, of which LSR A is the root-node, while LSR D, LSR F and LSR G are the leaf-nodes. According to the current method to establish a multicast tree, unidirectional connections from LSR A to the leaf-nodes are established respectively, including LSP1 to the leaf-node LSR D, LSP2 to the leaf-node LSR F, and LSP3 to the leaf-node LSR G. A merging process for the three LSPs is performed on the public path in order to share resources. After the unidirectional connections in the multicast tree are established, the allocation of label resources is shown in the 131 part of Figure 13. The unidirectional connections LSP1, LSP2 and LSP3 share the resource between LSR A and LSR B, and LSR B exchanges the local entrance label L1 to the exit labels L2 and L3 simultaneously. The unidirectional connections LSP2 and LSP3 share the resource among LSR A, LSR B and LSR E, and LSR E exchanges the local entrance label L1 to the exit labels L2 and L3 simultaneously. At this time, the root-node LSR A exchanges the local user signal 10 from the local entrance label L1 to the local exit label L2. The leaf-nodes LSR D, LSR F and LSR G can now receive the local user signal 10 from the root-node LSR A through the multicast tree.

As shown in Figure 12, when the leaf-node LSR D demands to transmit the local user signal 11 to other leaf-nodes, LSR D initiates a request to LSR A for a unidirectional connection, and establishes that a unidirectional connection LSP4 from LSR D to LSR A, through a node LSR H in the network. After the unidirectional connection LSP4 is established, the allocation of label resources is shown in the 130 part of Figure 13. The leaf-node LSR D maps the local user signal 11 to be transmitted into the local entrance label L2, and exchanges the entrance label L2 to the exit label L3. LSR H exchanges the entrance label L2 to the exit label L1, and LSR A allocates the entrance label L3 for the unidirectional connection LSP4. LSR A locally exchanges the entrance label L3 to the exit label L2 (as the process 7 in Figure 12), and deletes the existing local exchanging relationship from the entrance label L1 to the exit label L2. At this time, the local user signal 11 from LSR D can be transmitted to both leaf-nodes LSR F and LSR G, through the cooperation of the newly established unidirectional connection LSP4 and the original multicast tree. The local user signal 10 from LSR A may no longer be transmitted to other leaf-nodes of the multicast tree.

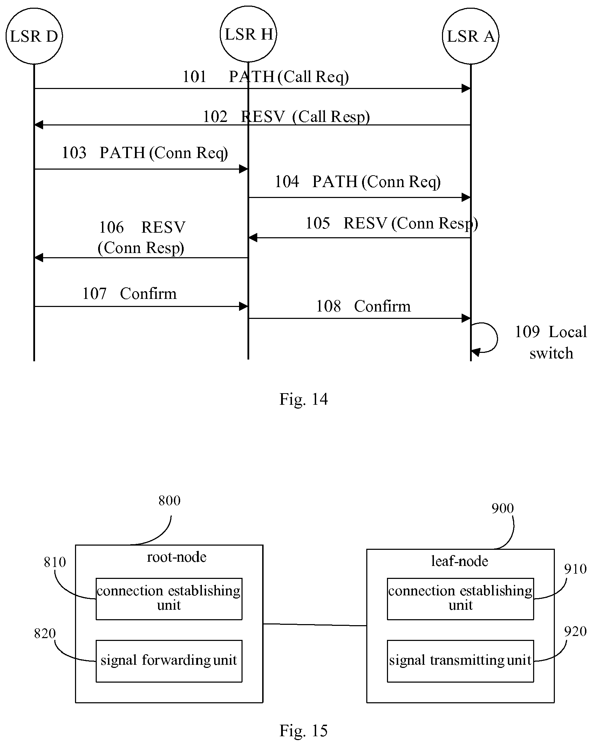

As shown in Figure 14, the steps for the leaf-node LSR D to transmit the local user signal 11 to other leaf-nodes of the multicast tree using the GMPLS RSVP-TE signaling protocol are as follows.
141. LSR D transmits the call request message PATH to LSR A, the call request message PATH containing the object of request instruction SEND_DATA_REQUEST that the leaf-node LSR D requests transmission of a signal to transmit the local user signal 11 to other leaf-nodes of the multicast tree;
142. After determining to receive the call request, LSR A transmits the call responding message RESV to LSR D;
143. LSR D can establish unidirectional connection LSP to LSR A via LSR H through route querying process, and transmits a PATH message to LSR H for requesting to establish a unidirectional connection from LSR D to LSR A;
144. LSR H transmits a PATH message to LSR A for requesting to establish a unidirectional connection from LSR D to LSR A;
145. LSR A allocates local entrance label L3 for that unidirectional connection upon receiving the PATH message requesting the unidirectional connection, and transmits a connection responding message RESV to LSR H;
146. LSR H allocates local entrance label L2 and exit label L1 for the unidirectional connection upon receiving the connection responding message, and transmits a connection respond message RESV to LSR D;
147. LSR D allocates local entrance label L2 and exit label L3 for the unidirectional connection upon receiving the connection responding message, and transmits a connection confirming message Confirm to LSR H;
148. LSR H forwards the Confirm message to LSR A after necessary local processes (such as the startup of monitoring and alarm process), upon receiving the Confirm message;
149. LSR A confirms the unidirectional connection from LSR D to LSR A to be established successfully after receiving the Confirm message; LSR A exchanges the local entrance label L3 to the exit label L2, and deletes the original exchanging relationship from the entrance label L1 to the exit label L2.

After the above steps are complete, the leaf-node LSR D of the multicast tree can transmit the local user signal 11 to other leaf-nodes of the multicast tree.

Referring to Figure 15, Figure 15 is a schematic diagram illustrating a practical implementation of the communication network system according to the present disclosure.

The communication network includes the root-node 800 and the leaf-node 900 in the multicast tree. When the leaf-node 900 transmits signal to other leaf-node of the multicast tree, it can be called as source leaf-node. Between the leaf-node 900 and the root-node 800, there is a connection from the leaf-node 900 to the root-node 800. The leaf-node 900 transmits a signal to the root-node 800 through the established connection, and the root-node 800 forwards the signal received by the established connection to the destination leaf-nodes of the multicast tree for receiving the signal (not shown in the figure).

In the embodiment, there are various forms to establish the connection from the leaf-node to the root-node. For example, the connection can be established by modifying the quasi bi-directional connection from the root-node to each leaf-node; or by establishing a new unidirectional connection from the leaf-node to the root-node when requiring the transmission of a signal.

The root-node 800 includes: a connection establishing unit 810 adapted to establish the connection with the source leaf-node 900 which transmit a signal in the multicast tree; and a signal forwarding unit 820 adapted to forward the signal received from the source leaf-node 900 through the established connection to the destination leaf-nodes of the multicast tree for receiving the signal.

The source leaf-node 900 includes: a connection establishing unit 910 adapted to establish a connection to the root-node 800 in the multicast tree; and a signal transmitting unit 920 adapted to transmit the signal that needs to reach the destination leaf-nodes of the multicast tree to the root-node 800 through the established connection.

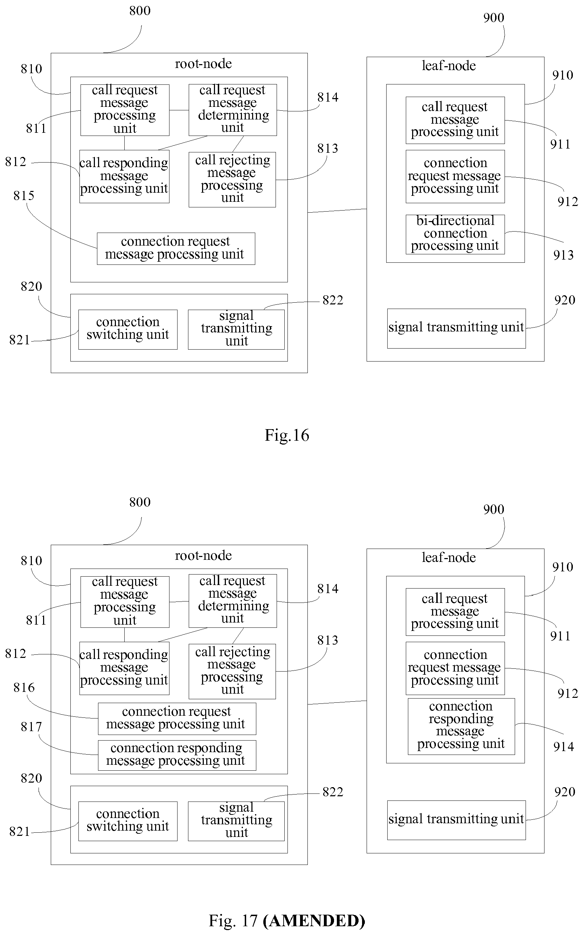

As shown in Figure 16, in one embodiment, the connection establishing unit 810 of the root-node 800 includes: a call request message processing unit 811 adapted to parse the call request message from the source leaf-node 900, the call request message containing the instruction information indicating that the source leaf-node requests the transmission of a signal; a call responding message processing unit 812 adapted to generate the call responding message to the source leaf-node 900 according to the instruction information; a call rejecting message processing unit 813 adapted to generate the call rejecting message to the source leaf-node 900 from which the call request message is transmitted; a call request determining unit 814 adapted to determine whether or not to accept the call request from the source leaf-node which transmitting the request message based on local policy, then informs the call responding message processing unit 812 if determining to receive, or informs the call rejecting message processing unit 813 if determining to reject; and a connection request message processing unit 815 adapted to generate a connection request message to the source leaf-node 900 through transit nodes (not shown in the figure), the connection request message containing the instruction information that requests to modify the quasi bi-directional connection into a bi-directional connection.

The signal forwarding unit 820 of the root-node 800 includes: a connection switching unit 821 adapted to switch the connection from the source leaf-node to the root-node, which is along the receiving direction, to the connection that is along the transmitting direction of the multicast tree; and a signal transmitting unit 822 adapted to forward the signal to each destination leaf-node through the connection that is along the transmitting direction of the multicast tree.

The connection establishing unit 910 of the source leaf-node includes: a call request message processing unit 911 adapted to generate a call request message to the root-node 800, the call request message containing the instruction information indicating that the source leaf-node requests the transmission of a signal; a connection request message processing unit 912 adapted to parse the connection request message which is transmitted by the root-node 800 through transit nodes, the connecting request message containing the instruction information that requests to modify the quasi bi-directional connection into a bi-directional connection; and a bi-directional connection processing unit 913 adapted to reserve resources according to the instruction information, and return a connection responding message to the root-node.

In the embodiment, the call request message processing unit 811 of the root-node 800 is a first path message processing unit which is adapted to deal with the PATH message of the extended GMPLS RSVP-TE protocol, the PATH message containing the instruction information indicating that the source leaf-node requests the transmission of a signal; the connection request message processing unit 815 of the root-node 800 is a second path message processing unit which is adapted to deal with the PATH message of the extended GMPLS RSVP-TE protocol, the PATH message containing the instruction information for the modification from the quasi bi-directional connection to a bi-directional connection.

Accordingly, the call request message processing unit 911 of the source leaf-node 900 is a fourth path message processing unit which adapted to deal with the PATH message of the extended GMPLS RSVP-TE protocol, the PATH message containing the instruction information indicating that the source leaf-node requests the transmission of a signal; the connection request message processing unit 912 of the source leaf-node 900 is a fifth path message processing unit that deals with the PATH message of the extended GMPLS RSVP-TE protocol, the PATH message containing the instruction information for the modification from the quasi bi-directional connection to a bi-directional connection.

In another embodiment, the connection establishing unit 810 of the root-node includes:
a call request message processing unit 811 adapted to parse a call request message from the source leaf-node, the call request message containing the instruction information indicating that the source leaf-node requests the transmission of a signal; a call responding message processing unit 812 adapted to generate a call responding message to the source leaf-node according to the instruction information; a call rejecting message processing unit 813 adapted to generate a call rejecting message to the source leaf-node 900 from which the call request message is transmitted; a call request determining unit 814 adapted to determine whether or not to accept the call request from the source leaf-node which transmitting the request message based on local policy, then informs the call responding message processing unit 812 if determining to receive, or informs the call rejecting message processing unit 813 if determining to reject; and a connection request message processing unit 816 adapted to parse the connection request message from the source leaf-node; and a connection responding message processing unit 817 adapted to generate a connection responding message to the source leaf-node so as to finish the establishment of the connection.

The signal forwarding unit 820 of the root-node 800 includes: a connection switching unit 821 adapted to switch the connection from the source leaf-node to the root-node, which is along the receiving direction, to the connection that is along the transmitting direction of the multicast tree; and a signal transmitting unit 822 adapted to forward the signal to each destination leaf-node through the connection that is along the transmitting direction of the multicast tree.

The connection establishing unit 910 of the source leaf-node 900 includes: a call request message processing unit 911 adapted to generate a call request message to the root-node, the call request message containing the instruction information indicating that the source leaf-node requests the transmission of a signal; a connection request message processing unit 912 adapted to generate a connection request message transmitted to the root-node; and a connection responding message processing unit 914 adapted to parse a connection responding message returned by the root-node.

In the embodiment, the call request message processing unit 811 of the root-node 800 is a third path message processing unit which is adapted to deal with the PATH message of the extended GMPLS RSVP-TE protocol, the PATH message containing the instruction information indicating that the source leaf-node requests the transmission of a signal.

The call request message processing unit 911 of the source leaf-node 900 is the sixth path message processing unit which is adapted to deal with the PATH message of the extended GMPLS RSVP-TE protocol, the PATH message containing the instruction information indicating that the source leaf-node requests the transmission of a signal.

The present disclosure is disclosed by, but not limited to, above exemplary embodiments. Any modifications, variations, and/or improvements in the scopes of the concepts and principles of the present disclosure shall fall within the scope of the appended claims of the present disclosure.

## Claims

1. A method for transmitting a signal between leaf-nodes of a multicast tree in a communication network, comprising:
determining (s11), by a root-node of the multicast tree, a quasi bi-directional connection to each leaf-node of the multicast tree, wherein in the quasi bi-directional connection, a unidirectional connection from the root-node to the leaf-node reserves resource on control plane and allocates the resource on transmission plane; a unidirectional connection from the leaf-node to the root-node only reserves resource on the control plane, and does not allocate the resource on the transmission plane;
transmitting (s12), by the root-node, to the each leaf-node a call request message which contains instruction information instructing to establish the quasi bi-directional connection;
determining (s13), by the each leaf-node, the call request message from the root-node for establishing the quasi bi-directional connection, according to the instruction information contained in the call request message;
returning (s13), by the each leaf-node, a call responding message to the root-node;
transmitting (s14), by the root-node, to the each leaf-node a connection request message which contains instruction information by which a unidirectional connection from the root-node to the leaf-node reserves resource on a control plane and allocates resource on a transmission plane, while a unidirectional connection from the leaf-node to the root-node only reserves resource on the control plane and does not allocate resource on the transmission plane;
reserving (s15), by the each leaf-node, resource according to the instruction information contained in the connection request message;
returning (s15), by the each leaf-node, a connection responding message to the root-node;
initiating (s21), by a source leaf-node of the multicast tree for transmitting a signal, an establishment request to modify the quasi bi-directional connection from the root-node to the source leaf-node into a bi-directional connection;
transmitting (s22), by the root-node, to the source leaf-node a connection request message which contains instruction information for modifying the quasi bi-directional connection into a bi-directional connection in response to the establishment request, wherein the instruction information for modifying the quasi bi-directional connection into a bi-directional connection instructs that the unidirectional connection from the source leaf-node to the root-node reserves resource on the control plane and allocates resource on the transmission plane;
reserving (s22), by the source leaf-node, resource according to the instruction information contained in the connection request message, and returning a responding message to the root-node;
transmitting (s23), by the source leaf-node, a signal to the root-node through the unidirectional connection from the leaf-node to the root-node of the established bi-directional connection; and
forwarding, by the root-node, the received signal to a destination leaf-node of the multicast tree.

2. The method according to claim 1, wherein the forwarding, by the root-node, the received signal to the destination leaf-node of the multicast tree comprises:
switching (s24), by the root-node, the connection from the source leaf-node to the root-node that is along the receiving direction, to a connection that is along the transmitting direction of the multicast tree; and
forwarding (s25), by the root-node, the signal to the destination leaf-node through the connection that is along the transmitting direction of the multicast tree.

3. A method for transmitting a signal between leaf-nodes of a multicast tree in a communication network, comprising:
transmitting (s31), by a source leaf-node of the multicast tree, to a root-node of the multicast tree a call request message containing instruction information indicating that the source leaf-node requests transmission of a signal;
determining (s32), by the root-node, that the source leaf-node requests the transmission of a signal according to the instruction information contained in the call request message, and returning a call responding message to the source leaf-node;
querying, (143), by the source leaf-node, a node, wherein the node is out of the multicast tree and can be used to establish a unidirectional connection from the source leaf-node to the root-node;
transmitting (s33), by the source leaf-node, a connection request message containing instruction information indicating the request to establish a unidirectional connection from the source leaf-node to the root-node via the node(143, 144);
returning (s34), by the root-node, a connection responding message to the source leaf-node via the node (145, 146) to complete the establishment of the connection from the source leaf-node to the root-node;
transmitting (s35), by the source leaf-node, a signal to the root-node via the node through the unidirectional connection from the source leaf-node to the root-node; and
forwarding, by the root-node, the received signal to destination leaf-nodes of the multicast tree.

4. The method according to claim 3, wherein the forwarding, by the root-node, the received signal to a destination leaf-node of the multicast tree comprises:
switching (s36), by the root-node, the connection from the source leaf-node to the root-node that is along the receiving direction, to the connection that is along the transmitting direction of the multicast tree; and
forwarding (s37), by the root-node, the signal to the destination leaf-node through the connection that is along the transmitting direction of the multicast tree.

## Patentansprüche

1. Verfahren zum Übertragen eines Signals zwischen Astknoten eines Vielfachsendungsbaums in einem Kommunikationsnetzwerk, umfassend:
Bestimmen (s11), durch einen Wurzelknoten des Vielfachsendungsbaums, einer quasibidirektionalen Verbindung zu jedem Astknoten des Vielfachsendungsbaums, wobei in der quasibidirektionalen Verbindung eine unidirektionale Verbindung von dem Wurzelknoten zu dem Astknoten Betriebsmittel auf der Steuerebene reserviert und Betriebsmittel auf der Übertragungsebene zuweist; eine unidirektionale Verbindung von dem Astknoten zu dem Wurzelknoten Betriebsmittel nur auf der Steuerebene reserviert und Betriebsmittel nicht auf der Übertragungsebene zuweist;
Übertragen (s12), durch den Wurzelknoten, einer Anrufanforderungsnachricht an jeden Astknoten, der Anweisungsinformationen enthält, die anweisen, die quasibidirektionale Verbindung einzurichten;
Bestimmen (s13), durch jeden Astknoten, der Anrufanforderungsnachricht von dem Wurzelknoten zum Einrichten der quasibidirektionalen Verbindung gemäß den in der Anrufanforderungsnachricht enthaltenen Anweisungsinformationen;
Zurücksenden (s13), durch jeden Astknoten, einer Anrufantwortnachricht an den Wurzelknoten;
Übertragen (s14), durch den Wurzelknoten, einer Verbindungsanforderungsnachricht an jeden Astknoten, die Anweisungsinformationen enthält, durch die eine unidirektionale Verbindung von dem Wurzelknoten zu dem Astknoten Betriebsmittel auf einer Steuerebene reserviert und Betriebsmittel auf einer Übertragungsebene zuweist, während eine unidirektionale Verbindung von dem Astknoten zu dem Wurzelknoten Betriebsmittel nur auf der Steuerebene reserviert und Betriebsmittel nicht auf der Übertragungsebene zuweist;
Reservieren (s15), durch jeden Astknoten, von Betriebsmitteln gemäß den in der Verbindungsanforderungsnachricht enthaltenen Anweisungsinformationen;
Zurücksenden (s15), durch jeden Astknoten, einer Verbindungsantwortnachricht an den Wurzelknoten;
Einleiten (s21), durch einen Quellen-Astknoten des Vielfachsendungsbaums zum Übertragen eines Signals, einer Einrichtungsanforderung zum Modifizieren der quasibidirektionalen Verbindung von dem Wurzelknoten zu dem Quellen-Astknoten zu einer bidirektionalen Verbindung;
Übertragen (s22), durch den Wurzelknoten, einer Verbindungsanforderungsnachricht an den Quellen-Astknoten, die Anweisungsinformationen zum Modifizieren der quasibidirektionalen Verbindung zu einer bidirektionalen Verbindung als Reaktion auf die Einrichtungsanforderung enthält, wobei die Anweisungsinformationen zum Modifizieren der quasibidirektionalen Verbindung zu einer bidirektionalen Verbindung anweisen, dass die unidirektionale Verbindung von dem Quellen-Astknoten zu dem Wurzelknoten Betriebsmittel auf der Steuerebene reserviert und Betriebsmittel auf der Übertragungsebene zuweist;
Reservieren (s22), durch den Quellen-Astknoten, von Betriebsmitteln gemäß den in der Verbindungsanforderungsnachricht enthaltenen Anweisungsinformationen und Zurücksenden einer Antwortnachricht an den Wurzelknoten;
Übertragen (s23), durch den Quellen-Astknoten, eines Signals an den Wurzelknoten durch die unidirektionale Verbindung von dem Astknoten zu dem Wurzelknoten der eingerichteten bidirektionalen Verbindung; und
Weiterleiten, durch den Wurzelknoten, des empfangenen Signals an einen Ziel-Astknoten des Vielfachsendungsbaums.

2. Verfahren nach Anspruch 1, wobei das Weiterleiten, durch den Wurzelknoten, des empfangenen Signals an den Ziel-Astknoten des Vielfachsendungsbaums umfasst:
Umschalten (s24), durch den Wurzelknoten, der Verbindung von dem Quellen-Astknoten zu dem Wurzelknoten, die entlang der Empfangsrichtung ist, zu einer Verbindung, die entlang der Übertragungsrichtung des Vielfachsendungsbaums ist; und
Weiterleiten (s25), durch den Wurzelknoten, des Signals an den Ziel-Astknoten durch die Verbindung, die entlang der Übertragungsrichtung des Vielfachsendungsbaums ist.

3. Verfahren zum Übertragen eines Signals zwischen Astknoten eines Vielfachsendungsbaums in einem Kommunikationsnetzwerk, umfassend:
Übertragen (s31), durch einen Quellen-Astknoten des Vielfachsendungsbaums, einer Anrufanforderungsnachricht an einen Wurzelknoten des Vielfachsendungsbaums, die Anweisungsinformationen enthält, die angeben, dass der Quellen-Astknoten die Übertragung eines Signals anfordert;
Bestimmen (s32), durch den Wurzelknoten, dass der Quellen-Astknoten die Übertragung eines Signals gemäß den in der Anrufanforderungsnachricht enthaltenen Anweisungsinformationen anfordert, und Zurücksenden einer Anrufantwortnachricht an den Quellen-Astknoten;
Abfragen (143), durch den Quellen-Astknoten, eines Knotens, ob der Knoten aus dem Vielfachsendungsbaum ist und zum Einrichten einer unidirektionalen Verbindung von dem Quellen-Astknoten zu dem Wurzelknoten verwendet werden kann;
Übertragen (s33), durch den Quellen-Astknoten, einer Verbindungsanforderungsnachricht, die Anweisungsinformationen enthält, die die Anforderung zum Einrichten einer unidirektionalen Verbindung von dem Quellen-Astknoten zu dem Wurzelknoten über den Knoten (143, 144) angeben;
Zurücksenden (s34), durch den Wurzelknoten, einer Verbindungsantwortnachricht an den Quellen-Astknoten über den Knoten (145, 146) zum Abschließen der Einrichtung der Verbindung von dem Quellen-Astknoten zu dem Wurzelknoten;
Übertragen (s35), durch den Quellen-Astknoten, eines Signals an den Wurzelknoten über den Knoten durch die unidirektionale Verbindung von dem Quellen-Astknoten zu dem Wurzelknoten; und
Weiterleiten, durch den Wurzelknoten, des empfangenen Signals an Ziel-Astknoten des Vielfachsendungsbaums.

4. Verfahren nach Anspruch 3, wobei das Weiterleiten, durch den Wurzelknoten, des empfangenen Signals an einen Ziel-Astknoten des Vielfachsendungsbaums umfasst:
Umschalten (s36), durch den Wurzelknoten, der Verbindung von dem Quellen-Astknoten zu dem Wurzelknoten, die entlang der Empfangsrichtung ist, zu der Verbindung, die entlang der Übertragungsrichtung des Vielfachsendungsbaums ist; und
Weiterleiten (s37), durch den Wurzelknoten, des Signals an den Ziel-Astknoten durch die Verbindung, die entlang der Übertragungsrichtung des Vielfachsendungsbaums ist.

## Revendications

1. Procédé de transmission d'un signal entre des noeuds feuilles d'un arbre de multidiffusion dans un réseau de communication, le procédé comprenant :
la détermination (s11), par un noeud racine de l'arbre de multidiffusion, d'une connexion quasi bidirectionnelle à chaque noeud feuille de l'arbre de multidiffusion, dans la connexion quasi bidirectionnelle, une connexion unidirectionnelle du noeud racine au noeud feuille réservant une ressource sur un plan de commande et allouant la ressource sur un plan de transmission ; une connexion unidirectionnelle du noeud feuille au noeud racine réservant uniquement une ressource sur le plan de commande et n'allouant pas la ressource sur le plan de transmission ;
la transmission (s12), par le noeud racine, à chaque noeud feuille précité, d'un message de demande d'appel contenant des informations d'instruction donnant pour instruction d'établir la connexion quasi bidirectionnelle ;
la détermination (s13), par chaque noeud feuille précité, du message de demande d'appel en provenance du noeud racine pour l'établissement de la connexion quasi bidirectionnelle en fonction des informations d'instruction contenues dans le message de demande d'appel ;
le renvoi (s13), par chaque noeud feuille précité, d'un message de réponse d'appel au noeud racine ;
la transmission (s14), par le noeud racine, à chaque noeud feuille précité, d'un message de demande de connexion contenant des informations d'instruction selon lesquelles une connexion unidirectionnelle du noeud racine au noeud feuille réserve une ressource sur un plan de commande et alloue une ressource sur un plan de transmission tandis qu'une connexion unidirectionnelle du noeud feuille au noeud racine réserve uniquement une ressource sur le plan de commande et n'alloue pas une ressource sur le plan de transmission ;
la réservation (s15), par chaque noeud feuille précité, d'une ressource en fonction des informations d'instruction contenues dans le message de demande de connexion ;
le renvoi (s15), par chaque noeud feuille précité, d'un message de réponse de connexion au noeud racine ;
le lancement (s21), par un noeud feuille source de l'arbre de multidiffusion pour la transmission d'un signal, d'une demande d'établissement visant à modifier la connexion quasi bidirectionnelle du noeud racine au noeud feuille source en une connexion bidirectionnelle ;
la transmission (s22), par le noeud racine, au noeud feuille source, d'un message de demande de connexion contenant des informations d'instruction visant à modifier la connexion quasi bidirectionnelle en une connexion bidirectionnelle en réponse à la demande d'établissement, les informations d'instruction visant à modifier la connexion quasi bidirectionnelle en une connexion bidirectionnelle donnant pour instruction que la connexion unidirectionnelle du noeud feuille source au noeud racine réserve une ressource sur le plan de commande et alloue une ressource sur le plan de transmission ;
la réservation (s22), par le noeud feuille source, d'une ressource en fonction des informations d'instruction contenues dans le message de demande de connexion, et le renvoi d'un message de réponse au noeud racine ;
la transmission (s23), par le noeud feuille source, d'un signal au noeud racine par le biais de la connexion unidirectionnelle du noeud feuille au noeud racine de la connexion bidirectionnelle établie ; et
le réacheminement, par le noeud racine, du signal reçu vers un noeud feuille destinataire de l'arbre de multidiffusion.

2. Procédé selon la revendication 1, dans lequel le réacheminement, par le noeud racine, du signal reçu vers le noeud feuille destinataire de l'arbre de multidiffusion comprend
la commutation (s24), par le noeud racine, de la connexion du noeud feuille source au noeud racine dans le sens réception sur une connexion dans le sens transmission de l'arbre de multidiffusion ; et
le réacheminement (s25), par le noeud racine, du signal vers le noeud feuille destinataire par le biais de la connexion dans le sens transmission de l'arbre de multidiffusion.

3. Procédé de transmission d'un signal entre des noeuds feuilles d'un arbre de multidiffusion dans un réseau de communication, le procédé comprenant :
la transmission (s31), par un noeud feuille source de l'arbre de multidiffusion, à un noeud racine de l'arbre de multidiffusion, d'un message de demande d'appel contenant des informations d'instruction indiquant que le noeud feuille source demande la transmission d'un signal ;
la détermination (s32), par le noeud racine, que le noeud feuille source demande la transmission d'un signal en fonction des informations d'instruction contenues dans le message de demande d'appel, et le renvoi d'un message de réponse d'appel au noeud feuille source ;
l'interrogation (143), par le noeud feuille source, d'un noeud, le noeud comptant parmi l'arbre de multidiffusion et étant susceptible d'être utilisé pour établir une connexion unidirectionnelle du noeud feuille source au noeud racine ;
la transmission (s33), par le noeud feuille source, d'un message de demande de connexion contenant des informations d'instruction indiquant la demande visant à établir une connexion unidirectionnelle du noeud feuille source au noeud racine via le noeud (143, 144) ;
le renvoi (s34), par le noeud racine, d'un message de réponse de connexion au noeud feuille source via le noeud (145, 146) aux fins d'achever l'établissement de la connexion du noeud feuille source au noeud racine ;
la transmission (s35), par le noeud feuille source, d'un signal au noeud racine via le noeud par le biais de la connexion unidirectionnelle du noeud feuille source au noeud racine ; et
le réacheminement, par le noeud racine, du signal reçu vers des noeuds feuilles destinataires de l'arbre de multidiffusion.

4. Procédé selon la revendication 3, dans lequel le réacheminement, par le noeud racine, du signal reçu vers un noeud feuille destinataire de l'arbre de multidiffusion comprend
la commutation (s36), par le noeud racine, de la connexion du noeud feuille source au noeud racine dans le sens réception sur la connexion dans le sens transmission de l'arbre de multidiffusion ; et
le réacheminement (s37), par le noeud racine, du signal vers le noeud feuille destinataire par le biais de la connexion dans le sens transmission de l'arbre de multidiffusion.
